# EUROPÄISCHE PATENTSCHRIFT

(11) **EP 2 750 934 B1**
(45) Veröffentlichungstag und Bekanntmachung des Hinweises auf die Patenterteilung: **06.05.2015**
(21) Anmeldenummer: 12743408.2
(22) Anmeldetag: 04.07.2012
(51) Int. Cl.: B60R 21/017

(54) **VORRICHTUNG UND VERFAHREN ZUR SPANNUNGSVERSORGUNG EINES PERSONENSCHUTZSYSTEMS**
APPARATUS AND METHOD FOR SUPPLYING VOLTAGE TO A PERSON PROTECTION SYSTEM
DISPOSITIF ET PROCÉDÉ D'ALIMENTATION EN TENSION D'UN SYSTÈME DE PROTECTION DES PERSONNES

(30) Priorität: 31.08.2011 DE 102011081904
(43) Veröffentlichungstag der Anmeldung: 09.07.2014
(73) Patentinhaber: Robert Bosch GmbH, 70442 Stuttgart (DE)
(72) Erfinder: SIEVERS, Falko, 72762 Reutlingen (DE); SCHUMACHER, Hartmut, 71691 Freiberg (DE); LIST, Carsten, 74399 Walheim (DE)
(86) Internationale Anmeldenummer: PCT/EP2012/063003
(87) Internationale Veröffentlichungsnummer: WO 2013/029840

(56) Entgegenhaltungen:
- DE-A1- 10 255 433
- US-A- 5 176 214

## Beschreibung

### Stand der Technik

Die Erfindung geht aus von einer Vorrichtung zur Spannungsversorgung eines Personenschutzsystems für ein Fahrzeug nach der Gattung des unabhängigen Patentanspruchs 1 und von einem Verfahren zur Spannungsversorgung eines Personenschutzsystems für ein Fahrzeug nach der Gattung des unabhängigen Patentanspruchs 9.

Aktuelle Steuergeräte für Personenschutzsysteme, welche beispielsweise ein Airbagsystem, einen Gurtstraffer, einen Überrollbügel usw. umfassen, verfügen in der Regel über die Fähigkeit, das jeweilige Personenschutzsystem trotz dauerhaft anliegender Batteriespannung in einen so genannten "Sleep-Mode" zu schalten, in welchem nahezu keine Funktionalität gefordert ist und die Stromaufnahme unter einen vorgegeben Wert von beispielsweise 100µA gesenkt werden kann. Die Entscheidung, ob das System aktiv oder "schlafend" sein soll, kann bei einem als Airbagsystem ausgeführten Personenschutzsystem beispielsweise mittels einer Spannungsüberwachung an einem separaten Eingangsanschlusspin eines Airbagsystem-ASICs (Application-Specific Integrated Circuit, Anwendungsspezifische Integrierte Schaltung) realisiert werden. Sobald an diesem Eingangsanschlusspin eine anliegende Spannung erkannt wird, welche größer als ein vorgegebener Schwellwert von beispielsweise 3V ist, wird das Airbagsystem aktiviert. Unterhalb des vorgegebenen Schwellwerts bleibt das Airbagsystem deaktiviert. Diese Spannungsschwelle für die Sleep-Erkennung ist fest hinterlegt und nicht projektspezifisch wähl- oder einstellbar. Neben dieser Sleep-Schwelle, welche die logische Entscheidung über einen EIN-Zustand und/oder einen AUS-Zustand des Airbagsystems festlegt, gibt es für jedes Airbagsystem eine von der Ausführungsform abhängige Spannungsschwelle, ab welcher die volle Funktionalität des Airbagsystems garantiert werden muss. Prinzipiell wird dabei zwischen "6V-Geräten" und ">6V- Geräten" unterschieden. Die "6V-Geräte" zeichnen sich dadurch aus, dass sie durch optimierte und kostenintensivere Eingangsfilter an der Energieversorgung bereits ab einer Versorgungsspannung von ca. 6V voll funktionsfähig sind. Die ">6V-Geräte" erfüllen diese Anforderung erst ab einer Versorgungsspannung von ca. 7V.

Liegt die Versorgungsspannung unterhalb von 6V bzw. 7V, dann wird das Airbagsystem durch Überschreitung der Sleep-Schwelle von ca. 3V bereits teilweise aktiviert, jedoch kann nicht garantiert werden, ob das Airbagsystem den Zustand der vollen Funktionsbereitschaft erreicht. So kann es beispielsweise zu einer starken Wärmeentwicklung oder einer erhöhten EMV-Abstrahlung im Airbagsystem kommen. Es besteht lediglich die Möglichkeit, Funktionen des Airbagsystems, welche über im Steuergerät ablaufende Softwareprogramm kontrolliert werden, spannungsabhängig zu aktivieren bzw. zu stoppen. Für die Schaltungsteile, welche unabhängig von den Softwareprogrammen sind, wie beispielsweise die zentrale Spannungsversorgung des Personenschutzsystems, gilt dies jedoch nicht.

US 5 176 214 beschreibt eine Spannungsversorgung eines Personenschutzsystems, bei der undefinierte Zustände durch Erkennung von Unterspannungen vermieden wird.

In der Offenlegungsschrift DE 102 55 433 A1 wird ein Verfahren zum Betreiben einer Spannungsversorgungsschaltung in einem Stromsparbetrieb beschrieben, in welchem die Stromaufnahme gegenüber dem regulären Betrieb reduziert ist. Die Spannungsversorgungsschaltung umfasst einen Spannungswandler mit einem für den Spannungswandlerbetrieb steuerbaren Spannungswandlerschalter und einem Spannungswandlerkondensator und einen dem Spannungswandler nachgeschalteten Längsregler zur Spannungsversorgung einer Last, insbesondere eines Mikroprozessors. Die Spannungsversorgungsschaltung kann für Sicherheitseinrichtungen wie beispielsweise Airbags, Gurtstraffer oder Überrollbügel eingesetzt werden. Zur Reduzierung der Stromaufnahme wird anstelle des regulären Spannungswandlerbetriebs dessen Spannungswandlerschalter zusammen mit dem Längsregler als Zweipunktregler hinsichtlich der am Ausgang des Spannungswandlers erzeugten Ausgangsspannung betrieben. Die an sich bekannte Zweipunktregelung wird vorzugsweise derart realisiert, dass Erfassungsmittel zur Detektion der am Ausgang des ersten Spannungswandlers er- zeugten Spannung und Steuermittel vorgesehen sind, welche den Spannungswandlerschalter einschalten, wenn die Erfassungsmittel einen unter einem ersten Schwellwert liegenden Spannungswert anzeigen und wieder ausschalten, wenn die Erfassungsmittel einen über einem zweiten Spannungswert liegenden Spannungswert anzeigen. Die Ansteuerung des Spannungswandlerschalters kann beispielsweise über einen Komparator erfolgen.

### Offenbarung der Erfindung

Die erfindungsgemäße Vorrichtung zur Spannungsversorgung eines Personenschutzsystems für ein Fahrzeug mit den Merkmalen des unabhängigen Patentanspruchs 1 und das erfindungsgemäße Verfahren zur Spannungsversorgung eines Personenschutzsystems für ein Fahrzeug mit den Merkmalen des unabhängigen Patentanspruchs 9 haben demgegenüber den Vorteil, dass das gesamte Personenschutzsystem erst ab einem ausreichend hohen Versorgungsspannungspegel aktiviert wird und bei einem zu niedrigen Versorgungsspannungspegel deaktiviert wird oder bleibt. Ist der Versorgungsspannungspegel also unterhalb des spezifizierten Spannungsbereichs, so wird die zentrale Spannungsversorgung des Personenschutzsystems deaktiviert und es wird nicht "versucht" die volle Funktionalität des Personenschutzsystems dauerhaft aufrecht zu erhalten. Somit können robuste Systemzustände auch bei einer gegebenen Unterversorgung garantiert werden. Das Personenschutzsystem ist also abhängig von der Versorgungsspannung entweder voll funktionsfähig oder bleibt bzw. wird vollständig deaktiviert.

Der Kern der Erfindung liegt darin, dass die Versorgungsspannung des Personenschutzsystems erst ab einem Schwellwertspannungspegel aktiviert wird, der vom Kunden gefordert und durch eine entsprechende Hardwareauslegung realisiert ist. Somit kann zu jedem Zeitpunkt garantiert werden, dass das Personenschutzsystem entsprechend der Spezifikation voll funktionsfähig ist und nicht in einen undefinierten Zwischenzustand gerät, bei welchem nur eine eingeschränkte Funktionalität zur Verfügung steht bzw. sogar unerwünschte Effekte, wie beispielsweise Übertemperaturen, auftreten können. Dadurch kann die Robustheit des Personenschutzsystems deutlich verbessert werden. Ebenso können die Kosten des Personenschutzsystems reduziert werden, da optimierte und kostenintensive Bauteile für den Unterspannungszustand eingespart werden bzw. notwendige Entwärmungsmaßnahmen wegfallen können. Der Schwellwertspannungspegel, ab dem das Personenschutzsystem aktiviert bzw. deaktiviert werden soll, kann dabei in Abhängigkeit von der Ausführungsform des Personenschutzsystems vorgegeben werden.

Ausführungsformen der vorliegenden Erfindung implementierten in vorteilhafter Weise zusätzliche Konfigurationsmittel für den Schwellwertspannungspegel. In Abhängigkeit von Kundenvorgaben kann der Schwellwertspannungspegel beispielsweise so gewählt werden, dass das Personenschutzsystem erst ab einem Versorgungsspannungspegel von beispielsweise 7V aktiviert wird und bei Unterschreitung dieser Schwelle in den "Sleep-Mode" versetzt wird, in welchem die aktive Energieversorgung des Personenschutzsystems eingestellt wird. Es kann somit erreicht werden, dass die Kundenvorgaben vollständig erfüllt werden und das Personenschutzsystem nicht unnötig belastet oder preislich verteuert wird. Die Belastung würde sich beispielsweise dadurch ergeben, dass das unveränderte Personenschutzsystem im Unterspannungszustand eine deutlich höhere Stromaufnahme und Eigenerwärmung zeigen würde. Diese könnte man ohne Ausführungsformen der vorliegenden Erfindung nur dadurch reduzieren, dass die Beschaltung in der Spannungsversorgungseinheit durch optimierte Bauteile, welche weniger Spannungsverluste usw. aufweisen, verbessert und somit verteuert wird. Durch Ausführungsformen der vorliegenden Erfindung kann diese Verteuerung der Beschaltung größten Teils vermieden werden und ist nur bei Ausführungsformen von Personenschutzsystemen erforderlich, welche tatsächlich bei niedrigsten Versorgungsspannungspegeln aktiviert werden müssen. Jedes Personenschutzsystem kann somit kosten- und verlustleistungsmäßig optimiert werden.

So können beispielsweise mindestens zwei unterschiedliche auswählbare Schwellwertspannungspegel vorgegeben werden, welche zur Aktivierung bzw. Deaktivierung der Spannungsversorgungseinheit genutzt werden können. In Abhängigkeit von der Ausführungsform des Personenschutzsystems kann dann zwischen diesen beiden Schwellwertspannungspegeln ausgewählt werden. Ausführungsformen der vorliegenden Erfindung können somit einfach und schnell an verschieden konfigurierte Personenschutzsysteme angepasst werden. Ausführungsformen der vorliegenden Erfindung stellen eine Vorrichtung zur Spannungsversorgung eines Personenschutzsystems in einem Fahrzeug zur Verfügung, welche eine Schalteinheit und eine Spannungsversorgungseinheit umfasst, welche dem Personenschutzsystem eine Betriebsspannung zur Verfügung stellt. Hierbei stellt die Schalteinheit der Spannungsversorgungseinheit eine Versorgungsspannung zur Verfügung, wenn die Versorgungsspannung einen vorgegebenen Schwellwertspannungspegel übersteigt. Erfindungsgemäß sind Konfigurationsmittel vorgesehen, welche verschiedene Referenzspannungspegel als Schwellwertspannungspegel für die Schalteinheit zur Verfügung stellen.

Zudem stellen Ausführungsformen der vorliegenden Erfindung ein Verfahren zur Spannungsversorgung eines Personenschutzsystems in einem Fahrzeug zur Verfügung, welches eine Schalteinheit und eine Spannungsversorgungseinheit umfasst, welche dem Personenschutzsystem eine Betriebsspannung zur Verfügung stellt, wobei die Schalteinheit der Spannungsversorgungseinheit eine Versorgungsspannung zur Verfügung stellt, wenn die Versorgungsspannung einen vorgegebenen Schwellwertspannungspegel übersteigt. Erfindungsgemäß werden verschiedene Referenzspannungspegel als Schwellwertspannungspegel für die Schalteinheit zur Verfügung gestellt, von welchen eine in Abhängigkeit von der aktuellen Ausführungsform der Spannungsversorgungseinheit und der Personenschutzsystem ausgewählt und mit einem aktuellen Pegel der Versorgungsspannung verglichen wird.

Durch die in den abhängigen Ansprüchen aufgeführten Maßnahmen und Weiterbildungen sind vorteilhafte Verbesserungen der im unabhängigen Patentanspruch 1 angegebenen Vorrichtung zur Spannungsversorgung eines Personenschutzsystems und des im unabhängigen Patentanspruch 9 angegebenen Verfahrens zur Spannungsversorgung eines Personenschutzsystems möglich.

Besonders vorteilhaft ist, dass die Referenzspannungspegel und somit die zugeordneten Schwellwertspannungspegel so gewählt werden können, dass ein Pegel der Versorgungsspannung, welche an die Spannungsversorgungseinheit angelegt ist, und ein Pegel der resultierenden Betriebsspannung, welche an das Personenschutzsystem angelegt ist, eine vollständige Funktionalität der Spannungsversorgungseinheit und des Personenschutzsystems ermöglichen.

In vorteilhafter Ausgestaltung der erfindungsgemäßen Vorrichtung können Vergleichsmittel vorgesehen werden, welche einen aktuellen Pegel der Versorgungsspannung mit dem Referenzspannungspegel vergleichen und ein Schaltsignal für ein Schaltelement erzeugen, wenn der aktuelle Pegel der Versorgungsspannung den Referenzspannungspegel überschreitet, wobei das Schaltelement im geschalteten Zustand die Versorgungsspannung an die Spannungsversorgungseinheit anlegt. Diese Vergleichsmittel sind beispielsweise als Komparator ausgeführt, wodurch eine kostengünstige Implementierung der Vergleichsmittel ermöglicht wird.

In weiterer vorteilhafter Ausgestaltung der erfindungsgemäßen Vorrichtung können die Konfigurationsmittel Auswahlmittel umfassen, welche in Abhängigkeit von einer ausgewählten Konfiguration einen zugeordneten Referenzspannungspegel auswählen. Des Weiteren können die Konfigurationsmittel Schaltschwellenvorgabemittel umfassen, welche den ausgewählten Referenzspannungspegel an die Schalteinheit ausgeben. Zudem können die Auswahlmittel ein Konfigurationssignal an die Schaltschwellenvorgabemittel ausgeben, welches den ausgewählten Referenzspannungspegel repräsentiert. Das Konfigurationssignal kann beispielsweise als Konfigurationsspannung implementiert werden, welche mindestens zwei verschiedene Spannungspegel aufweist und an mindestens einen Anschlusspin der Schaltschwellenvorgabemittel angelegt ist. Hierbei ist eine erste Konfiguration durch Konfigurationsspannungspegel repräsentiert, welche unterhalb eines vorgegebenen Schwellwertes, welcher zwischen den mindestens zwei Spannungspegeln liegt, und eine zweite Konfiguration ist durch Konfigurationsspannungspegel repräsentiert, welche dem vorgegebenen Schwellwert entsprechen oder größer als der vorgegebene Schwellwert sind.

Alternativ kann das Konfigurationssignal als Datensignal von einem implementierten Softwareprogramm erzeugt werden, wobei das Datensignal eine vorgebbare Anzahl von gültigen Datenworten umfasst, welche jeweils einem Referenzspannungspegel zugeordnet sind.

In vorteilhafter Ausgestaltung des erfindungsgemäßen Verfahrens werden die Referenzspannungspegel und somit die zugeordneten Schwellwertspannungspegel so gewählt, dass ein Pegel der Versorgungsspannung, welche an die Spannungsversorgungseinheit angelegt wird, und ein Pegel der resultierenden Betriebsspannung, welche an das Personenschutzsystem angelegt wird, eine vollständige Funktionalität der Spannungsversorgungseinheit und des Personenschutzsystems ermöglichen.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm eines Ausführungsbeispiels einer erfindungsgemäßen Vorrichtung zur Spannungsversorgung eines Personenschutzsystems.
Fig. 2 zeigt ein schematisches Blockdiagramm eines Ausführungsbeispiels von Aktivierungsmitteln für die Vorrichtung zur Spannungsversorgung eines Personenschutzsystems aus Fig. 1.
Fig. 3 zeigt ein Kennliniendiagramm eines Konfigurationssignals für die Aktivierungsmittel aus Fig. 2.
Fig. 4 zeigt ein Kennliniendiagramm von Systemzuständen einer Schalteinheit der Aktivierungsmittel aus Fig. 2.

### Ausführungsformen der Erfindung

Das Spannungsversorgungskonzept von aktuellen Personenschutzsystemen sieht vor, dass die Inbetriebnahme des Personenschutzsystems ab einer minimalen Batteriespannung von ca. 3V erfolgt, unabhängig davon, in welchem Spannungsbereich die Funktionalität durch den Kunden gefordert wird. Das bedeutet, dass jedes Personenschutzsystem oberhalb dieser Spannungsschwelle versucht, sämtliche Schaltungsteile in Betrieb zu nehmen. Aufgrund der extrem kleinen Eingangsspannung kann jedoch nicht sichergestellt werden, dass der Zustand voller Funktionalität erreicht wird. Unter Umständen stellt sich so ein Systemzustand ein, bei dem selbst die kleinste Änderung der Batteriespannung Auswirkungen auf die Funktionalität des Personenschutzsystems hat. Mittels interner Spannungsüberwachung und Spannungsauswertung kann zwar sichergestellt werden, dass es nicht zu kritischen Fehlverhalten kommt, jedoch kann dieser nicht vollfunktionsfähige Zwischenzustand des Personenschutzsystems nicht aktiv verlassen werden.

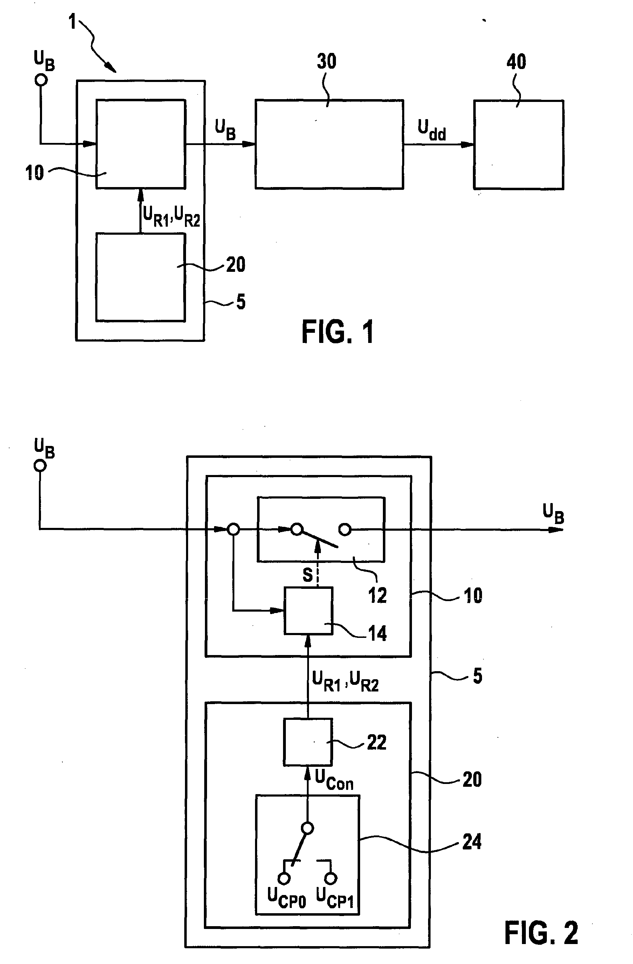

Wie aus Fig. 1 und 2 ersichtlich ist, umfasst das dargestellte Ausführungsbeispiel einer Vorrichtung 1 zur Spannungsversorgung eines Personenschutzsystems 40 in einem Fahrzeug eine Schalteinheit 10 und eine Spannungsversorgungseinheit 30, welche dem Personenschutzsystem 40 eine Betriebsspannung U_{dd} zur Verfügung stellt, wobei die Schalteinheit 10 der Spannungsversorgungseinheit 30 eine Versorgungsspannung U_{B} zur Verfügung stellt, wenn die Versorgungsspannung U_{B} einen vorgegebenen Schwellwertspannungspegel U_{B1}, U_{B2} übersteigt. Im Fahrzeug wird die Versorgungsspannung U_{B} von einer nicht dargestellten Fahrzeugbatterie und/oder von einem nicht dargestellten Generator erzeugt. Des Weiteren können die Spannungsversorgungseinheit 30 bzw. das Personenschutzsystem 40 nicht dargestellte Schaltungsteile umfassen, welche bei Ausfall der Versorgungsspannung U_{B} eine Notversorgung des Personenschutzsystems 40 im Crashfall sicherstellen.

Erfindungsgemäß sind Konfigurationsmittel 20 vorgesehen, welche verschiedene Referenzspannungspegel U_{R1}, U_{R2} als Schwellwertspannungspegel U_{B1}, U_{B2} für die Schalteinheit 10 zur Verfügung stellen. Die Referenzspannungspegel U_{R1}, U_{R2} und somit die zugeordneten Schwellwertspannungspegel U_{B1}, U_{B2} sind so gewählt, dass ein Pegel der Versorgungsspannung U_{B}, welche an die Spannungsversorgungseinheit 30 angelegt ist, und ein Pegel der resultierenden Betriebsspannung U_{dd}, welche an das Personenschutzsystem 40 angelegt ist, eine vollständige Funktionalität der Spannungsversorgungseinheit 30 und des Personenschutzsystems 40 ermöglichen. Für "6V-Geräte" werden der Referenzspannungspegel U_{R1}, U_{R2} und somit der zugeordnete Schwellwertspannungspegel U_{B1}, U_{B2} beispielsweise so gewählt, dass der Pegel der Versorgungsspannung U_{B}, welcher an die Spannungsversorgungseinheit angelegt wird, mindestens 6V beträgt. Für ">6V-Geräte" werden der Referenzspannungspegel U_{R1}, U_{R2} und somit der zugeordnete Schwellwertspannungspegel U_{B1}, U_{B2} beispielsweise so gewählt, dass der Pegel der Versorgungsspannung U_{B}, welcher an die Spannungsversorgungseinheit 30 angelegt wird, mindestens 7V beträgt. Im dargestellten Ausführungsbeispiel sind die Schaltmittel 10 und die Konfigurationsmittel 20 zu einer Aktivierungseinheit 5 zusammengefasst, welche in Abhängigkeit von vorgegebenen Kriterien die Versorgungsspannung U_{B} an die Spannungsversorgungseinheit 30 anlegt.

Wie aus Fig. 2 weiter ersichtlich ist, sind in der Schalteinheit 10 Vergleichsmittel 14 angeordnet, welche einen aktuellen Pegel der Versorgungsspannung U_{B} mit dem ausgewählten Referenzspannungspegel U_{R1}, U_{R2} vergleichen und ein Schaltsignal S für ein Schaltelement 12 erzeugen, wenn der aktuelle Pegel der Versorgungsspannung U_{B} den ausgewählten Referenzspannungspegel U_{R1}, U_{R2} überschreitet. Im dargestellten offenen Zustand, wird die Spannungsversorgungseinheit 30 nicht mit der Versorgungsspannung U_{B} versorgt. Erst im nicht dargestellten geschalteten Zustand legt das Schaltelement 12 die Versorgungsspannung U_{B} an die Spannungsversorgungseinheit 30 an. Die Spannungsversorgungseinheit 30 erzeugt dann aus der anliegenden Versorgungsspannung U_{B} die Betriebsspannung U_{dd} für das Personenschutzsystem 40.

Die Konfigurationsmittel 20 umfassen Auswahlmittel 24, welche in Abhängigkeit von einer ausgewählten Konfiguration C0, C1 einen zugeordneten Referenzspannungspegel U_{R1}, U_{R2} auswählen. Bei einer ersten Konfiguration C0, welche beispielsweise ein "6V-Gerät" repräsentiert, wird ein erster Referenzspannungspegel U_{R1} von ca. 6V ausgewählt. Bei einer zweiten Konfiguration C1, welche beispielsweise ein ">6V-Gerät" repräsentiert, wird dann ein zweiter Referenzspannungspegel U_{R2} von ca. 7V ausgewählt. Des Weiteren umfassen die Konfigurationsmittel 20 Schaltschwellenvorgabemittel 22, welche den ausgewählten Referenzspannungspegel U_{R1}, U_{R2} an die Schalteinheit 10 ausgeben. Zur Auswahl des Referenzspannungspegels U_{R1}, U_{R2} geben die Auswahlmittel 24 ein Konfigurationssignal U_{Con} an die Schaltschwellenvorgabemittel 22 aus, welches den ausgewählten Referenzspannungspegel U_{R1}, U_{R2} repräsentiert.

Wie aus Fig. 2 weiter ersichtlich ist, wird der ausgewählte Referenzspannungspegel U_{R1}, U_{R2} an die Vergleichsmittel 14 der Schalteinheit 10 angelegt. Legen die Schaltschwellenvorgabemittel 22 den ersten Referenzspannungspegel U_{R1} an die Vergleichsmittel 14 an, dann erzeugen die Vergleichsmittel 14 das Schaltsignal S für das Schaltelement 12, wenn der aktuelle Pegel der Versorgungsspannung U_{B} den ersten Schwellwertspannungspegel U_{B1} erreicht oder überschreitet. Legen die Schaltschwellenvorgabemittel 22 den zweiten Referenzspannungspegel U_{R2} an die Vergleichsmittel 14 an, dann erzeugen die Vergleichsmittel 14 das Schaltsignal S für das Schaltelement 12, wenn der aktuelle Pegel der Versorgungsspannung U_{B} den zweiten Schwellwertspannungspegel U_{B2} erreicht oder überschreitet.

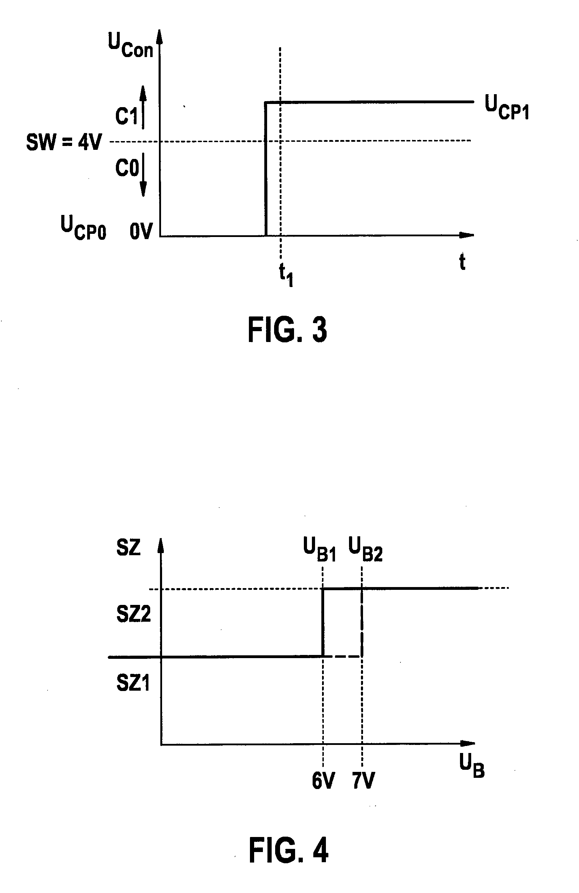

Im dargestellten Ausführungsbeispiel weisen die Auswahlmittel 24 einen Wechselschalter auf, welcher zwischen zwei Schaltzuständen umschaltbar ist, welche jeweils einen vorgegebenen Spannungspegel U_{CP0}, U_{CP1} zur Verfügung stellen. Hierzu ist das Konfigurationssignal U_{Con} als Konfigurationsspannung implementiert, welche mindestens zwei verschiedene Spannungspegel U_{CP0}, U_{CP1} aufweist und an mindestens einen Anschlusspin der Schaltschwellenvorgabemittel 22 angelegt ist. Die erste Konfiguration C0 wird durch Konfigurationsspannungspegel repräsentiert, welche unterhalb eines vorgegebenen Schwellwertes SW liegen, welcher zwischen den mindestens zwei Spannungspegel U_{CP0}, U_{CP1} liegt. Wie aus Fig. 3 ersichtlich ist, entspricht ein erster Spannungspegel U_{CP0} beispielsweise einer Spannung von ca. 0V und ein zweiter Spannungspegel U_{CP1} entspricht beispielsweise einer Spannung von ca. 5V und der Schwellwert SW entspricht beispielsweise einem Pegel von ca. 4V. Die zweite Konfiguration C1 wird durch Konfigurationsspannungspegel repräsentiert, welche dem welche dem vorgegebenen Schwellwert SW entsprechen oder größer als der vorgegebene Schwellwert SW sind. Im dargestellten Ausführungsbeispiel wird die erste Konfiguration C0, welche einem "6V-Betrieb" entspricht, oder die zweite Konfiguration C1, welche einem ">6V-Betrieb" entspricht, zu einem festen zum Zeitpunkt t1 während der Initialisierung der Vorrichtung 1 zur Spannungsversorgung ermittelt. Diese Ermittlung erfolgt in Abhängigkeit vom aktuellen Konfigurationsspannungspegel U_{CP0}, U_{CP1}, welcher als Konfigurationssignal U_{Con} an einem Konfigurationsanschlusspin der Schaltschwellenvorgabemittel 22 anliegt. Im dargestellten Ausführungsbeispiel liegt zum Zeitpunkt t1 der zweite Konfigurationsspannungspegel U_{CP1} am Konfigurationsanschlusspin der Schaltschwellenvorgabemittel 22 an. Bei einer einfachen Implementierung des ersten Konfigurationsspannungspegels U_{CP0} kann der Konfigurationsanschlusspin der Schaltschwellenvorgabemittel 22 über die Auswahlmittel 24 nach Masse kurzgeschlossen werden. Zur Implementierung des zweiten Konfigurationsspannungspegels U_{CP1} kann der Konfigurationsanschlusspin der Schaltschwellenvorgabemittel 22 über die Auswahlmittel 24 mit einem festen Spannungspegel einer internen Versorgungsspannung von ca. 5V verbunden werden. Für die restliche Bestromungsdauer wird der eingestellte Konfigurationszustand C0, C1 eingefroren, d.h. es gibt während des Betriebs keinen Übergang zwischen der ersten Konfiguration C0 und der zweiten Konfiguration C1 und umgekehrt. Erst bei einem vollständigen Rücksetzvorgang der Vorrichtung 1 zur Spannungsversorgung wird der eingestellte Konfigurationszustand C0, C1 wieder gelöscht und bei einem Neustart der Vorrichtung 1 zur Spannungsversorgung wieder neu eingelesen.

Wie aus Fig. 4 ersichtlich ist, halten Ausführungsformen der vorliegenden Erfindung mindestens zwei unterschiedliche Schwellwertspannungspegel U_{B1}, U_{B2} vor, die zur Aktivierung bzw. Deaktivierung der Spannungsversorgungseinheit 30 genutzt werden können. Projektspezifisch kann dann zwischen diesen Schwellen ausgewählt werden. Die entsprechende Konfiguration C0, C1 erfolgt im dargestellten Ausführungsbeispiel über den speziell dafür vorgesehenen Konfigurationsanschlusspin, welcher die verschiedenen logischen Zustände, je nach anliegendem Pegel des Konfigurationssignals U_{Con} an die Vergleichsmittel 14 meldet. Wird an diesem Konfigurationsanschlusspin beispielsweise der erste Spannungspegel U_{CP0} von ca. 0V erkannt, so wird der erste Schwellwertspannungspegel U_{B1} von ca. 6V eingestellt. Das bedeutet, dass die Vergleichsmittel 14 das Schaltsignal S für das Schaltelement 12 erzeugen und die Schalteinheit 10 von einem offenen ersten Schaltzustand SZ1 in den geschlossenen zweiten Schaltzustand SZ2 umschalten, wenn der aktuelle Pegel der Versorgungsspannung U_{B} den ersten Schwellwertspannungspegel U_{B1} von ca. 6V erreicht oder überschreitet. Liegt an dem Konfigurationsanschlusspin der zweite Spannungspegel U_{CP1} von ca. 5V an, so wird der zweite Schwellwertspannungspegel U_{B2} von ca. 7V eingestellt. Das bedeutet, dass die Vergleichsmittel 14 das Schaltsignal S für das Schaltelement 12 erzeugen und die Schalteinheit 10 von einem offenen ersten Schaltzustand SZ1 in den geschlossenen zweiten Schaltzustand SZ2 umschalten, wenn der aktuelle Pegel der Versorgungsspannung U_{B} den zweiten Schwellwertspannungspegel U_{B2} von ca. 7V erreicht oder überschreitet. Die Auswertung des Konfigurationsanschlusspins in den Vergleichsmitteln 14 kann dabei mit Komparatoren erfolgen.

Bei einer alternativen nicht dargestellten Ausführungsform der erfindungsgemäßen Vorrichtung wird das Konfigurationssignal U_{Con} als Datensignal von einem implementierten Softwareprogramm erzeugt. Hierbei umfasst das Datensignal eine vorgebbare Anzahl von gültigen Datenworten, welche jeweils einem Referenzspannungspegel U_{R1}, U_{R2} zugeordnet sind. In Abhängigkeit vom gewünschten Referenzspannungspegel U_{R1}, U_{R2} wird dann das korrespondierende Datenwort an die Vergleichsmittel 14 in der Schalteinheit 10 angelegt.

Ausführungsformen der vorliegenden Erfindung bieten die Möglichkeit, das gesamte Personenschutzsystem erst ab einer ausreichend hohen Versorgungsspannung zu aktivieren bzw. zu deaktivieren. Ist die Versorgungsspannung also unterhalb des spezifizierten Bereichs, so wird die zentrale Spannungsversorgung des Personenschutzsystems deaktiviert und es wird nicht "versucht" (da nicht vom Kunden gefordert), die volle Funktionalität dauerhaft aufrecht zu erhalten. Somit können robuste Systemzustände auch bei einer gegebenen Unterversorgung garantiert werden. Das Personenschutzsystem ist also abhängig von der vorhandenen Versorgungsspannung entweder voll funktionsfähig oder bleibt bzw. wird vollständig deaktiviert.

## Patentansprüche

1. Vorrichtung zur Spannungsversorgung eines Personenschutzsystems in einem Fahrzeug mit einer Schalteinheit (10) und einer Spannungsversorgungseinheit (30), welche dem Personenschutzsystem (40) eine Betriebsspannung (U_{dd}) zur Verfügung stellt, wobei die Schalteinheit (10) der Spannungsversorgungseinheit (30) eine Versorgungsspannung (U_{B}) zur Verfügung stellt, wenn die Versorgungsspannung (U_{B}) einen vorgegebenen Schwellwertspannungspegel (U_{B1}, U_{B2}) übersteigt, **gekennzeichnet durch** Konfigurationsmittel (20), welche verschiedene Referenzspannungspegel (U_{R1}, U_{R2}) als Schwellwertspannungspegel (U_{B1}, U_{B2}) für die Schalteinheit (10) zur Verfügung stellen.

2. Vorrichtung nach Anspruch 1, **dadurch gekennzeichnet, dass** die Referenzspannungspegel (U_{R1}, U_{R2}) und somit die zugeordneten Schwellwertspannungspegel (U_{B1}, U_{B2}) so gewählt sind, dass ein Pegel der Versorgungsspannung (U_{B}), welche an die Spannungsversorgungseinheit (30) angelegt ist, und ein Pegel der resultierenden Betriebsspannung (U_{dd}), welche an das Personenschutzsystem (40) angelegt ist, eine vollständige Funktionalität der Spannungsversorgungseinheit (30) und des Personenschutzsystems (40) ermöglichen.

3. Vorrichtung nach Anspruch 1 oder 2, **gekennzeichnet durch** Vergleichsmittel (14), welche einen aktuellen Pegel der Versorgungsspannung (U_{B}) mit dem Referenzspannungspegel (U_{R1}, U_{R2}) vergleichen und ein Schaltsignal (S) für ein Schaltelement (12) erzeugen, wenn der aktuelle Pegel der Versorgungsspannung (U_{B}) den Referenzspannungspegel (U_{R1}, U_{R2}) überschreitet, wobei das Schaltelement (12) im geschalteten Zustand die Versorgungsspannung (U_{B}) an die Spannungsversorgungseinheit (30) anlegt.

4. Vorrichtung nach einem der Ansprüche 1 bis 3, **dadurch gekennzeichnet, dass** die Konfigurationsmittel (20) Auswahlmittel (24) umfassen, welche in Abhängigkeit von einer ausgewählten Konfiguration (C0, C1) einen zugeordneten Referenzspannungspegel (U_{R1}, U_{R2}) auswählen.

5. Vorrichtung nach Anspruch 4, **dadurch gekennzeichnet, dass** die Konfigurationsmittel (20) Schaltschwellenvorgabemittel (22) umfassen, welche den ausgewählten Referenzspannungspegel (U_{R1}, U_{R2}) an die Schalteinheit (10) ausgeben.

6. Vorrichtung nach Anspruch 5, **dadurch gekennzeichnet, dass** die Auswahlmittel (24) ein Konfigurationssignal (U_{Con}) an die Schaltschwellenvorgabemittel (22) ausgibt, welches den ausgewählten Referenzspannungspegel (U_{R1}, U_{R2}) repräsentiert.

7. Vorrichtung nach Anspruch 6, **dadurch gekennzeichnet, dass** das Konfigurationssignal (U_{Con}) als Konfigurationsspannung implementiert ist, welche mindestens zwei verschiedene Spannungspegel (U_{CP0}, U_{CP1}) aufweist und an mindestens einen Anschlusspin der Schaltschwellenvorgabemittel (22) angelegt ist, wobei eine erste Konfiguration (C0) durch Konfigurationsspannungspegel repräsentiert ist, welche unterhalb eines vorgegebenen Schwellwertes (SW) liegen, welcher zwischen den mindestens zwei Spannungspegeln (U_{CP0}, U_{CP1}) liegt, und wobei eine zweite Konfiguration (C1) durch Konfigurationsspannungspegel repräsentiert ist, welche dem vorgegebenen Schwellwert (SW) entsprechen oder größer als der vorgegebene Schwellwert (SW) sind..

8. Vorrichtung nach Anspruch 6, **dadurch gekennzeichnet, dass** das Konfigurationssignal (U_{Con}) als Datensignal von einem implementierten Softwareprogramm erzeugbar ist, wobei das Datensignal eine vorgebbare Anzahl von gültigen Datenworten umfasst, welche jeweils einem Referenzspannungspegel (U_{R1}, U_{R2}) zugeordnet sind.

9. Verfahren zur Spannungsversorgung eines Personenschutzsystems in einem Fahrzeug, welches eine Schalteinheit (10) und eine Spannungsversorgungseinheit (30) umfasst, welche dem Personenschutzsystem (40) eine Betriebsspannung (U_{dd}) zur Verfügung stellt, wobei die Schalteinheit (10) der Spannungsversorgungseinheit (30) eine Versorgungsspannung (U_{B}) zur Verfügung stellt, wenn die Versorgungsspannung (U_{B}) einen vorgegebenen Schwellwertspannungspegel (U_{B1}, U_{B2}) übersteigt, **dadurch gekennzeichnet, dass** verschiedene Referenzspannungspegel (U_{R1}, U_{R2}) als Schwellwertspannungspegel (U_{B1}, U_{B2}) für die Schalteinheit (10) zur Verfügung gestellt werden, von welchen eine in Abhängigkeit von der aktuellen Ausführungsform der Spannungsversorgungseinheit (30) und der Personenschutzsystem (40) ausgewählt und mit einem aktuellen Pegel der Versorgungsspannung (U_{B}) verglichen wird.

10. Verfahren nach Anspruch 9, **dadurch gekennzeichnet, dass** die Referenzspannungspegel (U_{R1}, U_{R2}) und somit die zugeordneten Schwellwertspannungspegel (U_{B1}, U_{B2}) so gewählt werden, dass ein Pegel der Versorgungsspannung (U_{B}), welche an die Spannungsversorgungseinheit (30) angelegt wird, und ein Pegel der resultierenden Betriebsspannung (U_{dd}), welche an das Personenschutzsystem (40) angelegt wird, eine vollständige Funktionalität der Spannungsversorgungseinheit (30) und des Personenschutzsystems (40) ermöglichen.

## Claims

1. Apparatus for supplying voltage to a person protection system in a vehicle comprising a switching unit (10) and a voltage supply unit (30), which provides an operating voltage (U_{dd}) to the person protection system (40), wherein the switching unit (10) of the voltage supply unit (30) provides a supply voltage (U_{B}) when the supply voltage (U_{B}) exceeds a preset threshold value voltage level (U_{B1}, U_{B2}), **characterized by** configuration means (20), which provide various reference voltage levels (U_{R1}, U_{R2}) as threshold value voltage level (U_{B1}, U_{B2}) for the switching unit (10).

2. Apparatus according to Claim 1, **characterized in that** the reference voltage level (U_{R1}, U_{R2}) and therefore the associated threshold value voltage level (U_{B1}, U_{B2}) are selected in such a way that a level of the supply voltage (U_{B}) which is applied to the voltage supply unit (30) and a level of the resultant operating voltage (U_{dd}) which is applied to the person protection system (40) enable complete functionality of the voltage supply unit (30) and the person protection system (40).

3. Apparatus according to Claim 1 or 2, **characterized by** comparison means (14), which compare a present level of the supply voltage (U_{B}) with the reference voltage level (U_{R1}, U_{R2}) and generate a switching signal (S) for a switching element (12) when the present level of the supply voltage (U_{B}) exceeds the reference voltage level (U_{R1}, U_{R2}), wherein the switching element (12) in the switched state applies the supply voltage (U_{B}) to the voltage supply unit (30).

4. Apparatus according to one of Claims 1 to 3, **characterized in that** the configuration means (20) comprise selection means (24), which select an associated reference voltage level (U_{R1}, U_{R2}) depending on a selected configuration (C0, C1).

5. Apparatus according to Claim 4, **characterized in that** the configuration means (20) comprise switching threshold preset means (22), which output the selected reference voltage level (U_{R1}, U_{R2}) to the switching unit (10).

6. Apparatus according to Claim 5, **characterized in that** the selection means (24) outputs a configuration signal (U_{Con}) to the switching threshold preset means (22), which configuration signal represents the selected reference voltage level (U_{R1}, U_{R2}).

7. Apparatus according to Claim 6, **characterized in that** the configuration signal (U_{Con}) is implemented as configuration voltage, which has at least two different voltage levels (U_{CP0}, U_{CP1}) and is applied to at least one connection pin of the switching threshold preset means (22), wherein a first configuration (C0) is represented by configuration voltage levels which are below a preset threshold value (SW), which is between the at least two voltage levels (U_{CP0}, U_{CP1}), and wherein a second configuration (C1) is represented by configuration voltage levels which correspond to the preset threshold value (SW) or are greater than the preset threshold value (SW).

8. Apparatus according to Claim 6, **characterized in that** the configuration signal (U_{Con}) can be generated as data signal by an implemented software program, wherein the data signal comprises a presettable number of valid data words, which are each assigned to a reference voltage level (U_{R1}, U_{R2}).

9. Method for supplying voltage to a person protection system in a vehicle, which comprises a switching unit (10) and a voltage supply unit (30), which provides an operating voltage (U_{dd}) to the person protection system (40), wherein the switching unit (10) of the voltage supply unit (30) provides a supply voltage (U_{B}) when the supply voltage (U_{B}) exceeds a preset threshold value voltage level (U_{B1}, U_{B2}), **characterized in that** various reference voltage levels (U_{R1}, U_{R2}) are provided as threshold value voltage level (U_{B1}, U_{B2}) for the switching unit (10), of which one is selected depending on the present embodiment of the voltage supply unit (30) and the person protection system (40) and is compared with a present level of the supply voltage (U_{B}).

10. Method according to Claim 9, **characterized in that** the reference voltage levels (U_{R1}, U_{R2}) and therefore the associated threshold value voltage levels (U_{B1}, U_{B2}) are selected in such a way that a level of the supply voltage (U_{B}) which is applied to the voltage supply unit (30) and a level of the resultant operating voltage (U_{dd}) which is applied to the person protection system (40) enable complete functionality of the voltage supply unit (30) and the person protection system (40).

## Revendications

1. Dispositif d'alimentation en tension d'un système de protection des personnes dans un véhicule comportant une unité de commutation (10) et une unité d'alimentation en tension (30) qui fournit une tension de fonctionnement (U_{dd}) au système de protection des personnes (40), dans lequel l'unité de commutation (10) fournit à l'unité d'alimentation en tension (30) une tension d'alimentation (U_{B}) lorsque la tension d'alimentation (U_{B}) est supérieure à un niveau de tension de seuil prédéterminé (U_{B1}, U_{B2}), **caractérisé par** des moyens de configuration (20) qui fournissent différents niveaux de tension de référence (U_{R1}, U_{R2}) en tant que niveaux de tension de seuil (U_{B1}, U_{B2}) pour l'unité de commutation (10).

2. Dispositif selon la revendication 1, **caractérisé en ce que** les niveaux de tension de référence (U_{R1}, U_{R2}) et par conséquent, les niveaux de tension de seuil associés (U_{B1}, U_{B2}) sont sélectionnés de manière à ce qu'un niveau de la tension d'alimentation (U_{B}) qui est appliquée à l'unité d'alimentation en tension (30) et à ce qu'un niveau de la tension de fonctionnement qui en résulte (U_{dd}) qui est appliquée au système de protection des personnes (40) permettent une fonctionnalité complète de l'unité d'alimentation en tension (30) et du système de protection des personnes (40).

3. Dispositif selon la revendication 1 ou 2, **caractérisé par** des moyens de comparaison (14) qui comparent un seuil actuel de la tension d'alimentation (U_{B}) au seuil de tension de référence (U_{R1}, U_{R2}) et qui génèrent un signal de commutation (S) destiné à un élément de commutation (12) lorsque le seuil actuel de la tension d'alimentation (U_{B}) dépasse le niveau de tension de référence (U_{R1}, U_{R2}), dans lequel l'élément de commutation (12) à l'état commuté, applique la tension d'alimentation (U_{B}) à l'unité d'alimentation en tension (30)

4. Dispositif selon l'une quelconque des revendications 1 à 3, **caractérisé en ce que** les moyens de configuration (20) comprennent des moyens de sélection (24) qui sélectionnent un niveau de tension de référence (U_{R1}, U_{R2}) associé en fonction d'une configuration sélectionnée (C0, C1).

5. Dispositif selon la revendication 4, **caractérisé en ce que** les moyens de configuration (20) comprennent des moyens de réglage de seuil de commutation (22) qui délivrent le niveau de tension de référence sélectionné (U_{R1}, U_{R2}) à l'unité de commutation (10).

6. Dispositif selon la revendication 5, **caractérisé en ce que** le moyen de sélection (24) délivre aux moyens de réglage de seuil de commutation (22) un signal de configuration (U_{Con}) qui représente le niveau de tension de référence sélectionné (U_{R1}, U_{R2}).

7. Dispositif selon la revendication 6, **caractérisée en ce que** le signal de configuration (U_{Con}) est mis en oeuvre sous la forme d'une tension de configuration qui comprend au moins deux niveaux de tension différents (U_{CP0}, U_{CP1}) et qui est appliquée à au moins une broche de connexion des moyens de réglage de seuil de commutation (22), dans lequel une première configuration (C0) est représentée par des niveaux de tension de configuration qui sont inférieurs à une valeur de seuil prédéterminée (SW) se situant entre les au moins deux niveaux de tension (U_{CP0}, U_{CP1}), et dans lequel une seconde configuration (C1) est représentée par des niveaux de tension de configuration qui correspondent à la valeur de seuil prédéterminée (SW) ou qui sont supérieurs à la valeur de seuil prédéterminée (SW).

8. Dispositif selon la revendication 6, **caractérisé en ce que** le signal de configuration (U_{Con}) peut être généré par un programme mis en oeuvre de manière logicielle, dans lequel le signal de données comprend un nombre prédéterminé de mots de données valides qui sont associés à un niveau de tension de référence (U_{R1}, U_{R2}).

9. Procédé d'alimentation en tension d'un système de protection des personnes dans un véhicule, comprenant une unité de commutation (10) et une unité d'alimentation en tension (30) fournissant une tension de fonctionnement (U_{dd}) au système de protection des personnes (40), dans lequel l'unité de commutation (10) fournit à l'unité d'alimentation en tension (30) une tension d'alimentation (U_{B}) lorsque la tension d'alimentation (U_{B}) est supérieure à un niveau de tension de seuil prédéterminé (U_{B1}, U_{B2}), **caractérisé en ce que** différents niveaux de tension de référence (U_{R1}, U_{R2}) sont fournis en tant que niveau de tension de seuil (U_{B1}, U_{B2}) pour l'unité de commutation (10), dont l'une est sélectionnée en fonction de la forme de réalisation actuelle de l'unité d'alimentation en tension (30) et du système de protection des personnes (40) et est comparée à un niveau actuel de la tension d'alimentation (U_{B}).

10. Procédé selon la revendication 9, **caractérisé en ce que** les niveaux de tension de référence (U_{R1}, U_{R2}) et par conséquent, les niveaux de tension de seuil associés (U_{B1}, U_{B2}) sont sélectionnés de manière à ce qu'un niveau de la tension d'alimentation (U_{B}) qui est appliquée à l'unité d'alimentation en tension (30), et à ce qu'un niveau de la tension de fonctionnement qui en résulte (U_{dd}), qui est appliquée au système de protection des personnes (40), permettent une fonctionnalité complète de l'unité d'alimentation en tension (30) et du système de protection des personnes (40) .
